# EUROPÄISCHE PATENTSCHRIFT

(11) **EP 3 231 054 B1**
(45) Veröffentlichungstag und Bekanntmachung des Hinweises auf die Patenterteilung: **10.03.2021**
(21) Anmeldenummer: 15801402.7
(22) Anmeldetag: 26.11.2015
(51) Int. Cl.: H02J 3/18

(54) **BLINDLEISTUNGSKOMPENSATIONSMODUL FÜR DEN EINSATZ BEI NENNSPANNUNGEN IM WESENTLICHEN GRÖSSER 1000 V**
POWER FACTOR CORRECTION MODULE FOR USE AT RATED VOLTAGES OF SUBSTANTIALLY GREATER THAN 1000 V
MODULE DE COMPENSATION DE PUISSANCE RÉACTIVE POUR LA MISE EN OEUVRE AVEC DES TENSIONS NOMINALES ESSENTIELLEMENT SUPÉRIEURES À 1000 V

(30) Priorität: 09.12.2014 DE 202014009718 U; 09.01.2015 DE 202015000224 U
(43) Veröffentlichungstag der Anmeldung: 18.10.2017
(73) Patentinhaber: System Electric GmbH, 63589 Linsengericht-Altenhasslau (DE)
(72) Erfinder: HOLBE, Klaus, 87538 Obermaiselstein (DE)
(74) Vertreter: Kruspig, Volkmar
(86) Internationale Anmeldenummer: PCT/EP2015/077712
(87) Internationale Veröffentlichungsnummer: WO 2016/091595

(56) Entgegenhaltungen:
- CN-U- 203 536 966
- CN-Y- 201 365 073

## Beschreibung

Die Erfindung betrifft ein Blindleistungskompensationsmodul für den Einsatz bei Nennspannungen im Wesentlichen größer 1000 V, bestehend aus einer elektrisch verschalteten Anordnung von Leistungskondensatoren, Filterkreis- oder Strombegrenzungsdrosseln, Sicherungen, Schaltgeräten und falls erforderlich weiterer elektrischer Komponenten, wobei die vorgenannten Mittel zu einer baulich kompakten Einheit zusammengefasst sind, gemäß Oberbegriff des Anspruchs 1.

Aus der DE 10 2009 051 518 B3 ist eine modular aufgebaute Stromrichteranordnung mit einem Schaltschrank vorbekannt, die eine Mehrzahl von Hauptmodule ausbildenden Stromrichterbaugruppen, jeweils bestehend aus Submodulen, aufnimmt. Die Submodule umfassen jeweils ein Schalt- und ein Kondensatormodul.

Der Schaltschrank weist Verbindungseinrichtungen zur elektrischen Kontaktierung der Stromrichterbaugruppen sowie für jede Stromrichterbaugruppe ein Schienensystem zu deren mechanischen Anordnung auf.

Das dortige Kondensatormodul besitzt eine Gleichspannungskontakteinrichtung zur elektrischen Verbindung des zugehörigen Schaltmoduls sowie Gleitelemente. Darüber hinaus besitzt das Schaltmodul eine Kühleinrichtung. Die Gleitelemente der Submodule sind in den gleichen Schienen des Schienensystems des Schaltschranks gestapelt befindlich.

Eine modular aufgebaute Schaltungsanordnung mit einer auf Hochspannungspotential befindlichen, ersten leistungselektronischen Baugruppe sowie einer auf niedrigerem Potential befindlichen zweiten leistungselektronischen Baugruppe nebst galvanischem Trenntransformator ist aus der DE 198 41 133 A1 bekannt.

Die erste Baugruppe und damit verbundene Stromanschlüsse des Transformators befinden sich in einem weitgehend quaderförmig ausgebildeten Isolierstoffgehäuse. Das Isolierstoffgehäuse weist auf seiner Deck- und Bodenfläche sowie auf seiner nach vorne abgeschlossenen Frontseite jeweils eine auf Masse oder Erdpotential geführte elektrisch leitende Schicht auf. Durch die Seitenflächen des Moduls ist jeweils ein Stromanschluss der leistungselektronischen Baugruppen geführt.

Bei der gattungsbildenden DE 42 08 612 A1 wird von einer elektrischen Anlage für ein Mittel- oder Niederspannungsnetz ausgegangen, wobei es sich insbesondere um eine Anlage zur Kompensation von Blindleistung handelt.

Die bekannte Anlage enthält mindestens ein Kondensatormodul und mindestens ein Steuermodul, wobei das mindestens eine Kondensatormodul und das mindestens eine Steuermodul jeweils kastenförmig ausgebildet sind, um den Bauraumbedarf zu begrenzen. Bei der Anlage nach DE 42 08 612 A1 sollen vorgefertigte, gleichartig ausgebildete Module übereinander stapelbar sein, so dass die Herstellungskosten für die gesamte Anlage reduzierbar sind. Bei einer diesbezüglichen Ausführungsform ist eine als selbsttragender Turm ausgebildete Blindleistungskompensationsanlage vorgesehen, wobei der Turm aus kastenförmig ausgebildeten und übereinander gestapelten Modulen besteht. Beispielsweise sind drei gleichartig aufgebaute und gleiche Funktionen erfüllende Kondensatormodule vorhanden, welche auf einem den Boden des Turms bildenden Leermodul ruhen. Oberhalb des letzten Kondensatormoduls befindet sich ein Steuermodul, welches seinerseits ein als Abdeckung wirkendes weiteres Leermodul trägt.

Eine Montagewand dient der Halterung eines Sammelschienenabschnitts und einer Klemmleiste für Steuerleitungen zu Leistungsschützen. Darüber hinaus trägt die vorerwähnte Montagewand ein über die Steuerleitungen auf die Leistungsschütze wirkendes Steuer- und Regelelement, welches je nach Anforderung das Öffnen oder Schließen eines oder mehrerer der Leistungsschütze veranlasst. Nach Fertigstellung des Turms der Anlage werden die Sammelschienenabschnitte verbunden und zum externen Anschluss geführt. Weiterhin erfolgt ein Anschließen an die bei jedem der Kondensatormodule vorgesehenen Serienschaltungen von Drosseln und Leistungskondensatoren.

Eine derartige Ausbildung einer wünschenswert kompakten Blindleistungskompensationsanlage kann unter Beachtung der Verlustwärme sowie der erforderlichen Luft- und Kriechstrecken nur maximal im Niederspannungsnetz Anwendung finden. Eine turmartige Anordnung führt zwar beim Vorsehen entsprechender Lüftungskanäle zu einem an sich gewünschten Belüftungs-Kamineffekt, führt jedoch aber auch dazu, dass thermisch empfindlichere Bauteile einer unnötigen Temperaturbelastung durch solche Bauteile oder Baugruppen ausgesetzt sind, die aufgrund hoher Verlustwärme als Wärmequelle wirken.

Bei der Anlage nach CN 203 536 966 U oder nach CN 201 365 073 Y, handelt es sich um ein Blindleistungskompensationsmodul für den Einsatz in Niederspannungsanlagen.

Aus dem Vorgenannten ist es daher Aufgabe der Erfindung, ein weiterentwickeltes Blindleistungskompensationsmodul für den Einsatz bei Nennspannungen im Wesentlichen größer 1000 V anzugeben, wobei der Bauraum eines derartigen Moduls zu reduzieren ist und die Möglichkeit besteht, das Modul in an sich bekannte Schaltschranksysteme einschiebbar auszuführen, so dass die Aufwendungen sowohl für die Montage, aber auch im Fall einer Wartung gering sind.

Die Lösung der Aufgabe der Erfindung erfolgt durch die Lehre der Merkmalskombination nach Anspruch 1, wobei die Unteransprüche mindestens zweckmäßige Ausgestaltungen und Weiterbildungen umfassen.

Es wird demnach von einem Blindleistungskompensationsmodul für den Einsatz bei Nennspannungen von größer 1 kV ausgegangen, bestehend aus einer elektrisch verschalteten Anordnung von Leistungskondensatoren, Filterkreis- oder Strombegrenzungsdrosseln, Sicherungen, Schaltgeräten und falls erforderlich weiterer elektrischer Komponenten, wobei die vorgenannten Mittel zu einer baulich kompakten Einheit zusammengefasst sind.

Erfindungsgemäß ist ein Einschubrahmen, ausgebildet als Tragrahmen, vorgesehen, welcher zwei Flächenbereiche aufweist.

In einem ersten Flächenbereich sind räumlich nebeneinander die erforderlichen Leistungskondensatoren angeordnet.

In einem zweiten Flächenbereich sind die Filterkreis- oder Strombegrenzungsdrosseln räumlich übereinander befindlich, und zwar derart, dass die Verlustwärme der Drosseln ohne Beeinträchtigung der Funktionsweise der Leistungskondensatoren abgeführt werden kann.

Weiterhin weist der Einschub- oder Tragrahmen Mittel zum Ein- und Ausfahren und Verriegeln des gesamten Moduls in ein an sich bekanntes Schaltschranksystem auf.

Bei einer bevorzugten Ausführungsform der Erfindung übersteigt die Höhe der Stapelanordnung der Drosselwicklungen diejenige der nebeneinander angeordneten Leistungskondensatoren, wobei im diesbezüglich verbleibenden Raumvolumen die Sicherungen und Schaltgeräte sowie weitere technische Komponenten anordenbar sind.

Am Einschubrahmen ist eine Frontplatte fixiert, welche Transportgriffe und Mittel zur Verriegelung bezüglich des Schaltschranksystems aufweist.

Zum leichteren Ein- und Ausfahren des Blindleistungskompensationsmoduls bezogen auf das entsprechende Schaltschranksystem sind am Boden des Einschubrahmens Rollen, Räder oder dergleichen Mittel vorgesehen.

Zwischen den vertikal übereinander angeordneten Drosselwicklungen verbleiben Freiräume zur Kühlluftführung und es werden hierüber gleichzeitig die notwendigen Trennungsabstände realisiert.

Der erwähnte erste Flächenbereich ist zur Vorderseite und der erwähnte zweite Flächenbereich zur Rückseite des Blindleistungskompensationsmoduls orientiert. Durch die Aufteilung der Flächenbereiche Vorderseite/Rückseite und die realisierte Masseverteilung mit den Wicklungen der Filterkreis- oder Strombegrenzungsdrosseln im rückseitigen zweiten Flächenbereich ist gewährleistet, dass das Modul bei Wartungsarbeiten nahezu bis zur Hälfte aus einem Schranksystem herausziehbar ist, ohne dass die Gefahr des Abkippens besteht.

Der erste und der zweiten Flächenbereich sind Teilflächen einer Gesamtfläche von im Wesentlichen 600 x 1000 mm bis 800 x 1200 mm.

Das vorbeschriebene Blindleistungskompensationsmodul kann baulich in ein an sich bekanntes Mittelspannungs-Schranksystem integriert werden. Damit sind letztendlich Leistungseinschübe von 100 bis z. B. 1000 kVar auf einer relativ kleinen Grundfläche realisierbar.

Die Erfindung soll nachstehend anhand eines Ausführungsbeispiels sowie von Figuren näher erläutert werden.

Hierbei zeigen:
- Fig. 1: eine Vorderansicht des Blindleistungskompensationsmoduls ohne Frontplatte;
- Fig. 2: eine Seitenansicht des Moduls;

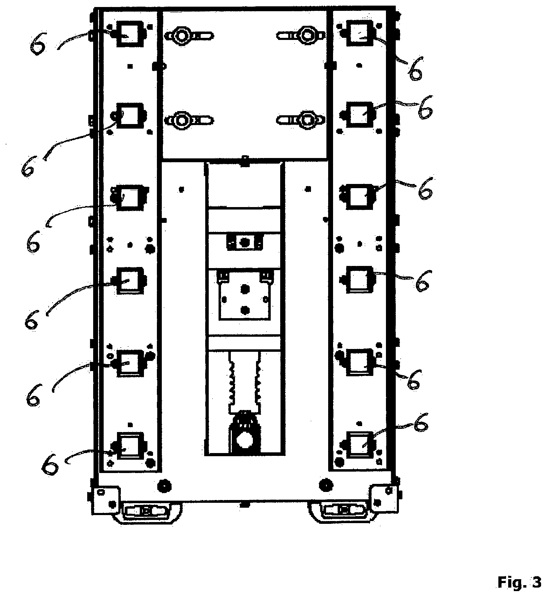

- Fig. 3: eine Ansicht von unten mit erkennbaren sechs Rollenpaaren und
- Fig. 4: eine perspektivische Darstellung des Blindleistungskompensationsmoduls mit Frontplatte und seitlicher Verkleidung.

Wie aus den Figuren ersichtlich, besteht das erfindungsgemäße Blindleistungskompensationsmodul aus Sicherungen 1, einem Vakuumschütz 2, mehreren übereinander gestapelten Filter- oder Saugkreis-Drosselwicklungen 3 sowie zwei benachbarten Leistungskondensatoren 4.

Die Auswahl der elektrischen Komponenten und deren Verschaltung ist so gewählt, dass das Blindleistungskompensationsmodul im Bereich von beispielsweise 6 bis 12 kV einsetzbar ist.

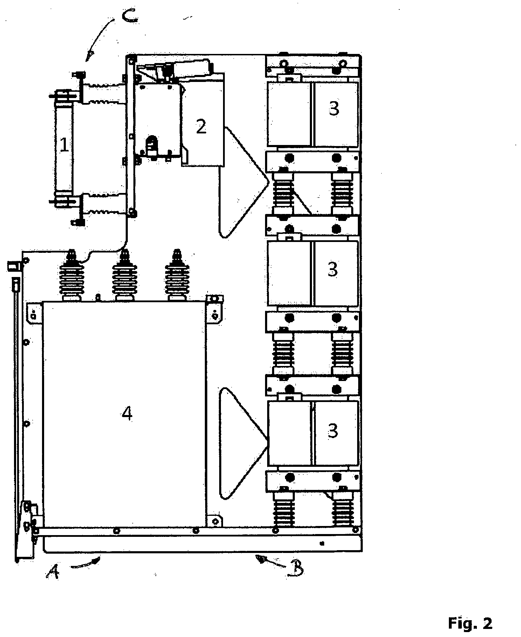

Auf einem Einschubrahmen 5, der an seiner Unterseite Laufrollen 6 oder dergleichen Mittel aufweist, befindet sich im vorderen Modulbereich (siehe Fig. 2) eine Anordnung von Leistungskondensatoren 4.

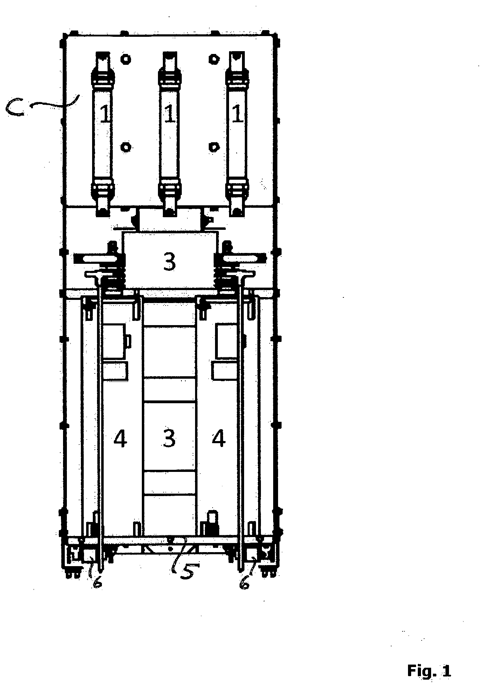

Die zueinander beabstandeten Leistungskondensatoren 4 (siehe Fig. 1) befinden sich auf einem ersten Flächenbereich A.

Auf einem zweiten Flächenbereich B ist die Stapelanordnung aus Filterkreis- oder Strombegrenzungsdrosseln 3 befindlich.

Verlustwärme der Drosseln 3 kann damit ohne Beeinträchtigung der Funktionsweise der Leistungskondensatoren 4 abgeführt werden.

Die Höhe der Stapelanordnung der Drosselwicklungen 3 übersteigt diejenige der Leistungskondensatoren 4, wobei im diesbezüglich verbleibenden Raumvolumen C die Sicherungen 1 und Schaltgeräte 2 vorgesehen sind.

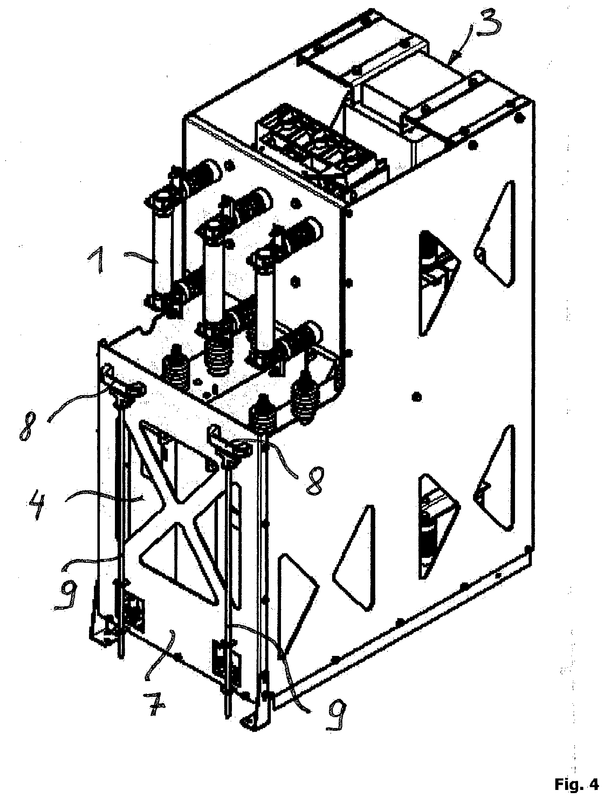

Am Einschubrahmen 5 kann eine in der Figur nicht gezeigte Frontplatte 7 (siehe Figur 4) befestigt sein, welche Transportgriffe 8 und Mittel zur Verriegelung 9 des Moduls bezüglich des nicht gezeigten Schaltschranksystems aufweist.

Aus der figürlichen Darstellung, insbesondere der Fig. 2, ist nachvollziehbar, dass zwischen den vertikal übereinander angeordneten Drosseln 3 ein Freiraum zur Kühlluftführung verbleibt. Ebenso ist ein Freiraum zwischen der Anordnung der Kondensatoren 4 und der Drosseln 3 vorgesehen.

Der erste Flächenbereich A mit den Leistungskondensatoren erstreckt sich bei einer bevorzugten Ausführungsform zur Vorderseite des Moduls und der zweite Flächenbereich B zur Rückseite.

Beim gezeigten Beispiel nehmen beide Flächenbereiche A und B insgesamt eine Fläche von 625 x 1050 mm ein. Damit ist ein Modul geschaffen, der ohne weiteres in Schaltschranksysteme bekannter Art integrierbar ist.

Durch die optimale Anordnung der Kondensatoren und der Drosseln sind Leistungseinschübe von 100 bis z. B. 1000 kVar auf der genannten relativ kleinen Grundfläche aufbaubar. Bei einer beispielhaften Höhe von z.B. 1530 mm sind keine grundsätzlichen Beschränkungen zum vorerwähnten Integrieren in gängige Schaltschranksysteme gegeben.

Die gewählte Einschubtechnik mit beispielsweise Rollen 6 ermöglicht es, dass am Boden bekannter Mittelspannungs-Schaltschranksysteme lediglich nachträglich Führungsschienen anzubringen sind, um die gewünschte vorteilhafte Montage des Moduls oder aber auch das teilweise oder komplette Entfernen zu Wartungszwecken zu realisieren.

## Patentansprüche

1. Blindleistungskompensationsmodul für den Einsatz bei Nennspannungen im Wesentlichen größer 1000 V, bestehend aus einer elektrisch verschalteten Anordnung von Leistungskondensatoren (4), Filterkreis- oder Strombegrenzungsdrosseln (3), Sicherungen (1) sowie Schaltgeräten (2) und gegebenenfalls weiterer elektrischer Komponenten, wobei die vorgenannten Mittel zu einer baulich kompakten Einheit zusammengefasst sind, weiterhin ein Einschubrahmen (5) enthalten ist, der Mittel (6) zum Ein- und Ausfahren des Moduls in ein Schranksystem aufweist
**dadurch gekennzeichnet, dass**
der Einschubrahmen (5) zwei Flächenbereiche aufweist, wobei in einem ersten Flächenbereich (A) räumlich nebeneinander die Leistungskondensatoren (4) und in einem zweiten Flächenbereich (B) die Wicklungen der Filterkreis- oder Strombegrenzungsdrosseln (3) räumlich übereinander befindlich sind, derart, dass Verlustwärme der Drosseln (3) ohne Beeinträchtigung der Funktionsweise der Leistungskondensatoren (4) abführbar ist, die Höhe der Stapelanordnung der Drosselwicklungen (3) diejenige der Anordnung der Leistungskondensatoren (4) übersteigt, wobei im diesbezüglich verbleibenden Raumvolumen (C) die Sicherungen (1) und Schaltgeräte (2) enthalten sind, sowie der erste Flächenbereich (A) für die Leistungskondensatoren (4) zur Vorderseite und der zweite Flächenbereich (B) für die Wicklungen der Filterkreis- oder Strombegrenzungsdrosseln (3) zur Rückseite des Moduls orientiert sind..

2. Blindleistungskompensationsmodul nach Anspruch 1,
**dadurch gekennzeichnet, dass**
am Einschubrahmen (5) eine Frontplatte mit Transportgriffen und einer Verriegelung bezüglich des Schranksystem ausgebildet ist.

3. Blindleistungskompensationsmodul nach einem der vorangegangenen Ansprüche,
**dadurch gekennzeichnet, dass**
am Boden des Einschubrahmens (5) Rollen, Räder (6) oder dergleichen Gleiteinrichtungen vorgesehen sind.

4. Blindleistungskompensationsmodul nach einem der vorangegangenen Ansprüche,
**dadurch gekennzeichnet, dass**
zwischen den vertikal übereinander angeordneten Drosseln (3) Freiräume zur Kühlluftführung verbleiben.

5. Blindleistungskompensationsmodul nach einem der vorangegangenen Ansprüche,
**dadurch gekennzeichnet, dass**
der erste und der zweite Flächenbereich (A; B) Teilflächen einer Gesamtfläche von im Wesentlichen 600 x 1000 mm bis 800 x 1200 mm sind.

6. Blindleistungskompensationsmodul nach einem der vorangegangenen Ansprüche,
**dadurch gekennzeichnet, dass**
dieses baulich in ein an sich bekanntes Mittelspannungs-Schranksystem integrierbar ist.

## Claims

1. A power factor correction module for use at rated voltages of substantially greater than 1000 V, composed of an electrically interconnected arrangement of power capacitors (4), filter circuit or current limiting chokes (3), fuses (1) as well as switching devices (2) and, if required, further electrical components, wherein the above mentioned means are combined in a constructively compact unit, furthermore an insert frame (5) being included having means (6) for moving the module into and out from a cabinet system,
**characterized in that**
the insert frame (5) has two surface areas, wherein in a first surface area (A), the power capacitors (4) are located spatially next to one another, and in a second surface area (B) the windings of the filter circuit or current limiting chokes (3) are located spatially one above the other such that loss heat of the chokes (3) can be discharged without impairing the functional mode of the power capacitors (4), the height of the stack arrangement of the choke windings (3) exceeds that of the arrangement of power capacitors (4), wherein the fuses (1) and switching devices (2) are included in the space volume (C) remaining in this respect, and the first surface area (A) for the power capacitors (4) is oriented toward the front side, and the second surface area (B) for the windings of the filter circuit or current limiting chokes (3) is oriented toward the rear side of the module.

2. The power factor correction module according to claim 1,
**characterized in that**,
on the insert frame (5), a front plate having transport handles and a locking with respect to the cabinet system is formed.

3. The power factor correction module according to any one of the preceding claims,
**characterized in that**
rolls, wheels (6) or similar sliding devices are provided on the bottom of the insert frame (5).

4. The power factor correction module according to any one of the preceding claims,
**characterized in that**
between the chokes (3) that are arranged vertically one above the other, free spaces remain for conveying cooling air.

5. The power factor correction module according to any one of the preceding claims,
**characterized in that**
the first and the second surface areas (A; B) are partial surfaces of a total surface of substantially 600 x 1000 mm to 800 x 1200 mm.

6. The power factor correction module according to any one of the preceding claims,
**characterized in that**
it can be integrated constructively into a medium voltage cabinet system known per se.

## Revendications

1. Module de compensation de puissance réactive destiné à être utilisé à des tensions nominales essentiellement supérieures à 1000 V, constitué par un ensemble électriquement connecté de condensateurs de puissance (4), de selfs de circuits de filtrage ou de limitation de courant (3), de fusibles (1) et de dispositifs de commutation (2) et, le cas échéant, d'autres composants électriques, les moyens susmentionnés étant combinés pour former une unité structurellement compacte, comprenant en outre un cadre d'insertion (5) qui comprend des moyens (6) pour introduire et extraire le module dans un système d'armoire,
**caractérisé en ce que**
le cadre d'insertion (5) présente deux zones de surface, les condensateurs de puissance (4) étant situés spatialement les uns à côté des autres dans une première zone de surface (A) et les enroulements des selfs de circuit de filtrage ou de limitation de courant (3) étant situés spatialement les uns au-dessus des autres dans une deuxième zone de surface (B), de telle sorte que la perte de chaleur des selfs (3) peut être dissipée sans que le fonctionnement des condensateurs de puissance (4) ne soit perturbé,
la hauteur de l'empilement des enroulements des selfs (3) dépasse celle de l'ensemble des condensateurs de puissance (4),
les fusibles (1) et les dispositifs de commutation (2) sont contenus dans le volume d'espace respectif restant (C), et
la première zone de surface (A) pour les condensateurs de puissance (4) est orientée vers la face avant, et la deuxième zone de surface (B) pour les enroulements des selfs de circuit de filtrage ou de limitation de courant (3) est orientée vers la face arrière du module.

2. Module de compensation de puissance réactive selon la revendication 1,
**caractérisé en ce que**
un panneau frontal avec des poignées de transport et un moyen de verrouillage par rapport au système d'armoire est formé sur le cadre d'insertion (5).

3. Module de compensation de puissance réactive selon l'une des revendications précédentes,
**caractérisé en ce que**
des roulettes, des roues (6) ou des moyens de coulissement similaires sont prévus au fond du cadre d'insertion (5).

4. Module de compensation de puissance réactive selon l'une des revendications précédentes,
**caractérisé en ce que**
des espaces libres sont laissés entre les selfs (3) disposées verticalement les unes au-dessus des autres, pour guider l'air de refroidissement.

5. Module de compensation de puissance réactive selon l'une des revendications précédentes,
**caractérisé en ce que**
les première et deuxième zones de surface (A ; B) sont des surfaces partielles d'une surface totale sensiblement de 600 x 1000 mm à 800 x 1200 mm.

6. Module de compensation de puissance réactive selon l'une des revendications précédentes,
**caractérisé en ce que**
celui-ci est structurellement intégrable dans un système d'armoire moyenne tension connu en soi.
